# EUROPÄISCHE PATENTANMELDUNG

(11) **EP 0 878 227 A2**
(43) Veröffentlichungstag der Anmeldung: **18.11.1998**
(21) Anmeldenummer: 98108309.0
(22) Anmeldetag: 07.05.1998
(51) Int. Cl.: B01D 46/24, F02M 35/024

(54) **Vorrichtung sowie Element zur Flüssigkeitsabscheidung in Gasströmen**

(30) Priorität: 17.05.1997 DE 19720775
(71) Anmelder: Filterwerk Mann & Hummel GmbH, 71638 Ludwigsburg (DE)
(72) Erfinder: Greif, Volker, 71069 Sindelfingen (DE); Kochert, Stefan, 71384 Weinstadt (DE); Mössinger, Klaus, 74182 Obersulm (DE); Spaeth, Bernd, 89073 Ulm (DE)
(74) Vertreter: Voth, Gerhard, Dipl.-Ing.

(57) **Zusammenfassung**

Beschrieben wird ein Element zur Flüssigkeitsrückhaltung in Gasströmen, wobei das Element über wenigstens zwei Lagen eines Wirrfaservlieses (2), einen Einlaß (3), einen Flüssigkeitsauslaß (8) und einen Luftauslaß (7) verfügt.

## Beschreibung

Die Erfindung betrifft eine Vorrichtung sowie ein Element zur Flüssigkeitsabscheidung in Gasströmen.

Aus dem DE-U 297 14 886 ist eine Reinigungsvorrichtung zum Abscheiden von Partikeln aus einem Gasstrom bekannt. Diese ist insbesondere für Ölabcheidesysteme in Verbrennungskraftmaschinen geeignet. Das Filterelement der Reinigungsvorrichtung ist in einem Halteelement angeordnet, wobei das Halteelement in einem von dem Gasstrom durchsetzten Strömungsweg eindringbar ist. Das Filterelement besteht im wesentlichen aus einer Vliesmatte mit relativ geringer Dichte.

Ein Nachteil dieser Anordnung besteh darin, daß die wirksame Filterfläche sehr gering ist. Dies bedeutet, daß der Abscheidegrad bei einem vertretbaren Druckabfall zwischen Anström- und Abströmseite relativ gering ist.

Derartige Vorrichtungen sind auch aus herkömmlichen Kompressoranlagen bekannt, in denen die verdichtete Druckluft entölt wird sowie aus der Entölung von Kurbelgehäusegasen in Brennkraftmaschinen. Will man bei solchen Vorrichtungen die Flüssigkeitsabscheiderate verändern, so ist daran nachteilig, daß die Abmessungen stark variieren.

Es ist Aufgabe der vorliegenden Erfindung, eine Vorrichtung bzw. ein Element der eingangs genannten Art zu schaffen und dahingehend zu verbessern, daß ein flexibles Anpassen an verschiedene Abscheideraten bei bestehenden kompakten Abmessungen der Vorrichtung möglich ist, wobei dies billig und zuverlässig für eine große Bandbreite von Druckbereichen einsetzbar sein soll.

Erfindungsgemäß wird die Aufgabe dadurch gelöst, daß ein Element zur Flüssigkeitsrückhaltung in Gasströmen geschaffen wird, das über wenigstens zwei Lagen eines Wirrfaservlieses, einen Einlaß, einen Flüssigkeitsauslaß und einen Luftauslaß verfügt. Durch die Verwendung von Vliesen, insbesondere durch die Anbringung mehrerer Lagen von Vliesschichten werden derartige Elemente relativ flexibel hinsichtlich der Parameter Abscheiderate und Abmessung des Elements. Die Verwendung derartiger Vliese ist zudem billiger als vergleichbare Produkte, die aus gestricktem oder gewebtem Stahldraht hergestellt sind, das Element ist zudem leichter.

Eine vorteilhafte Weiterbildung der Erfindung sieht vor, daß die Lagen des Wirrfaservlieses die gleiche Faserfeinheit aufweisen. Dadurch kann sehr exakt die Abscheiderate in direkter Abhängigkeit des Druckverlustes, der mit der zunehmenden Zahl von Vliesstofflagen zunimmt, eingestellt werden.

Eine andere vorteilhafte Weiterbildung der Erfindung sieht vor, daß die Lagen des Wirrfaservlieses unterschiedliche Faserfeinheiten aufweisen. Durch die größere Variantenvielfalt läßt sich in Abhängigkeit der Anzahl der Vlieslagen und der unterschiedlichen Kombinationen der Faserfeinheiten die Abscheiderate bzw. der Druckverlust einstellen.

Eine zusätzliche vorteilhafte Weiterbildung der Erfindung sieht vor, daß eine Lage Wirrfaservlieses ein Flächengewicht von 100 bis 500 Gramm pro Quadratmeter aufweist. Wie Versuche gezeigt haben, ergeben sich im Bereich dieser Flächengewichte erhebliche Vorteile bezüglich des Abscheideverhaltens. Ganz besonders vorteilhafte Eigenschaften haben sich ebenfalls im Bereich von 300 bis 400 Gramm pro Quadratmeter Flächengewicht des Vlieses gezeigt, insbesondere des Einsatzes in Bereichen, in denen der durch das Flüssigkeitsrückhalteelement verursachte Druckverlust nur sehr gering sein darf.

Eine vorteilhafte Weiterbildung der Erfindung sieht vor, daß die Lagen aus Wirrfaservlies ein gasdurchlässiges Stützmittel aufweisen. Dieses Stützmittel gibt dem Element eine formgebende Struktur. Dadurch wird es möglich, beinahe beliebige geometrische Strukturen nachzubilden, die dann von den Vlieslagen umgeben sind. Ebenfalls wäre denkbar, daß die Vlieslagen z.B. im Inneren eines rohrförmigen Stützmittels angeordnet sind, das Element ist auf diese Weise sehr flexibel einzusetzen, wenn es gilt, veränderten geometrischen Anforderungen Rechnung zu tragen.

Eine andere vorteilhafte Weiterbildung der Erfindung sieht vor, daß das Element drei oder mehr Lagen Wirrfaservlies aufweist. Die Verwendung mehrerer Lagen von Vliesen zeigte entgegen theroretischer Ansätze, die den idealen Fall bei einer Schicht ansiedelten, vorteilhafte Ergebnisse hinsichtlich des Abscheidegrades, insbesondere auch hinsichtlich der Anpassungsfähigkeit an sich verändernde Betriebszustände, wie dies beispielsweise bei einer Verbrennungskraftmaschine der Fall ist, die im Verlauf ihrer Betriebslebensdauer mit zunehmendem Alter mehr Öl in die Durchblasgase aufgrund größer werdender Toleranzen abgibt. Hierbei bietet sich nun an, die Anzahl an Vlieslagen zu erhöhen, um dem betriebsbedingt höheren Anteil an Öl zu begegnen. Ein weiterer Vorteil durch die Verwendung mehrerer Lagen von Vliesen liegt darin begründet, daß es durch geeignete Auswahl der Vlieslagen bezüglich Schichtdicke und Faserfeinheit möglich wird, aus derartigen Elementen zwei- oder mehrstufige Abscheideelemente zu schaffen, die in unterschiedlichen Bereichen Partikel bzw. Tröpfchen unterschiedlicher Größe abscheiden.

Eine zusätzliche vorteilhafte Weiterbildung der Erfindung sieht vor, daß das Element mit einem Deckel und einem Boden eine bauliche Einheit bildet. Durch die Verwendung von Deckel und Boden, die den Ein- bzw. Auslaß enthalten können, wird die Schaffung eines flexibel anpaßbaren Elements möglich. Insbesondere bei rohrförmigen Elementen entstehen durch das Variieren der Vliesrohrlänge in Verbindung mit Deckel und Boden Elemente unterschiedlicher Flüssigkeitsrückhaltungskapazität.

Eine andere vorteilhafte Weiterbildung der Erfindung sieht vor, daß wenigstens eine Lage des Wirrfaservlieses aus Melt-Blown-Vlies besteht. Vorteilhaft hierbei ist beispielsweise, daß durch die Verwendung sortenreiner Materialien wie z. B. Polyester das spätere Wiederverwerten der verbrauchten Elemente sich einfacher gestaltet, insbesondere, wenn der Deckel und der Boden aus dem selben Material wie die Vlieslagen sind. Ebenfalls sind derartige Vliese wesentlich leichter und billiger als die bisher bekannten Glasfaserwickel oder Stahldrahtgestricke. Ein weiterer Vorteil besteht hinsichtlich des Druckverlustes, der bei Glasfaserwickeln höher ist. Vorteilhafterweise können derartige Elemente mittels der Zweikomponenten-Spritzgußtechnik mit einem Trägermaterial umspritzt werden, das eine Art Gehäuse bildet.

Eine Alternative stellt das sogenannte Spiegelschweißen von Endkappen an Stirnseiten der Vlies-Elemente dar, um so ein einbaufertiges Element zu erhalten, das die Roh- von der Reinluftseite trennt.

Erfindungsgemäß ist vorgesehen, daß eine Vorrichtung zum Rückhalten von Flüssigkeiten in Gasströmen geschaffen wird, in der ein Element der bereits beschriebenen Art zum Einsatz kommt. Vorteilhafterweise können derartige Vorrichtungen in einem sehr weiten Anwendungsspektrum zum Einsatz gelangen. Dies reicht vom Luftentöler in Kompressoren über die Luftentölung der Durchblasgase des Kurbelgehäuses einer Verbrennungskraftmaschine, z. B. in handelsüblichen Kraftfahrzeugen über die Abluftreinigung bzw. die Luftentölung von z. B. Gebäuden, bis hin zum allgemeinen Tropfenabscheider in Gasströmungen. Ein weiterer vorteilhafter Anwendungsfall stellt der zukünftige Einsatz im Abgastrakt einer Wasserstoffverbrennungskraftmaschine dar, die eigentlich nur Wasserdampf in die Umgebung abgibt, der aber erfahrungsgemäß mit kleinsten Öltröpfchen befrachtet sein wird, insbesondere mit zunehmendem Lebensalter der Wasserstoffverbrennungskraftmaschine. Vorteilhafterweise sind mit derartigen Vorrichtungen Flüssigkeitsabscheidegrade größer als 90% zu erzielen, wenn die Partikel bis zu 0,6 µm groß sind. Durch die Erhöhung der spezifischen Faserzahl oder durch die Erhöhung der Schichtdicke der Vlieslage bzw. durch die Erhöhung der Anzahl der Vlieslagen und/oder durch die Verwendung feinerer Fasern, was ebenfalls einer Erhöhung der wirksamen Oberfläche gleichkommt, sind Abscheidegrade größer 90 % erzielbar, wenn die Partikel bis zu 0,1 µm groß sind.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung und ihrer vorteilhaften Weiterbildungen werden im folgenden unter Bezugnahme auf die beigefügten Zeichnungen und die Bezugszeichenliste näher beschrieben. Es stellen dar:
- Figur 1a: einen Schnitt durch ein fünflagiges Element zur Flüssigkeitsrückhaltung,
- Figur 1b: einen Schnitt durch den Deckel aus Figur 1a,
- Figur 2: einen Schnitt durch eine Vorrichtung zum Rückhalten von Flüssigkeiten,
- Figur 3: zwei Elemente in Reihenanordnung,
- Figur 4: eine Variante mit zwei Elementen in Reihenanordnung,
- Figur 5: ein Element mit einem Vorabscheider,
- Figur 6: einen Ölabscheider mit Sensor und Sicherheitsventil,
- Figur 7: ein System zur Kurbelgehäusegasentölung.

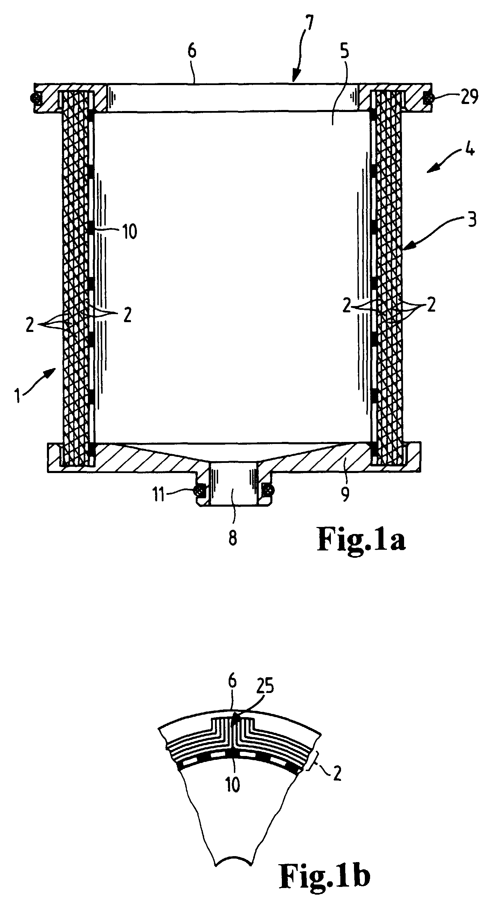

Das in Figur 1a dargestellte Element 1 zur Flüssigkeitsrückhaltung umfaßt 5 konzentrisch angeordnete Lagen eines Wirrfaservlieses 2. Das Element 1 zur Füssigkeitsrückhaltung weist einen Einlaß 3 auf, der der aktiven Manteloberfläche des Wirrfaservlieses entspricht. Die Wirrfaservlieslagen trennen den Rohgasbereich 4 vom Reingasbereich 5 ab, wobei sie dabei von einem Deckel 6, der über einen Luftauslaß 7 verfügt und von einem einen Flüssigkeitsauslaß 8 aufweisenden Boden 9 unterstützt werden. Der Deckel 6 und der Boden 9 sind über ein Stützmittel 10 derart miteinander verbunden, daß diese einen sogenannten Grundkörper des Elements 1 bilden, wobei die Wirrfaservlieslagen 2 konzentrisch um das Stützmittel angeordnet sind. Um den im Boden 9 angeordneten Flüssigkeitsauslaß 8 befindet sich eine Dichtung 11. Der Boden 9 weist auf seiner Reingasseite eine zum Flüssigkeitsauslaß 8 hin konisch zulaufende Aussparung auf, die der zurückgehaltenen Flüssigkeit den Weg zum Flüssigkeitsauslaß 8 weist.

Im Schnitt durch den Deckel 6 des Element 1 ist die Wirrfaservlieslagenlängsnaht 25 in Figur 1b dargestellt. Mittels der Wirrfaservlieslagenlängsnaht 25 werden die Wirrfaservlieslagen 2 zu einem Schlauch zusammengefaßt. Dies geschieht entweder, indem man die Wirrfaservlieslagen 2 miteinander vernäht, oder aber mittels Heiß- oder Schmelzverklebung. Dieser Schlauch wird mit leichter Spannung auf das Stützmittel 10 aufgebracht. Alternativ werden die Vlieslagen auf dem Stützmittel aufgewickelt, wobei die letzte Lage an ihrem Ende mit der vorletzten Lage verbunden wird, was mittels mechanischer Verfestigung oder temperatur- oder lösemittelbedingter Vereinigung geschieht.

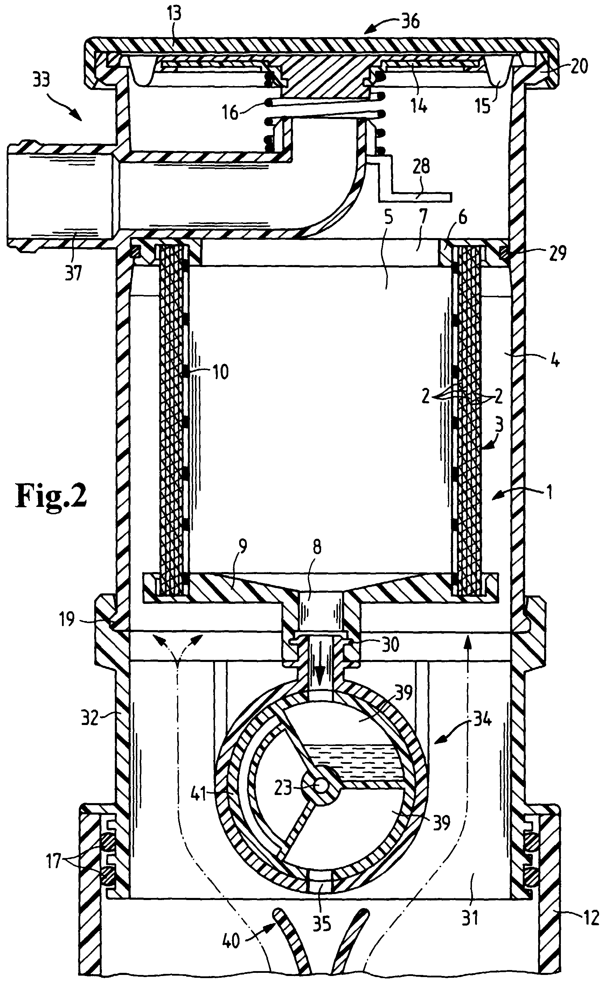

In der in Figur 2 dargestellten Ausführungsform besteht die Vorrichtung zum Rückhalten von Flüssigkeiten 33 aus einem zylindrischen Gehäuse 32, in dem das Element zur Flüssigkeitsrückhaltung 1 auswechselbar eingesetzt ist. Zur leichteren Demontage des Gehäuses, insbesondere aber um z. B. das Element 1 auszuwechseln, ist eine Schnappverbindung 19 zwischen der Vorrichtung 33 und dem Gehäuse 32 vorgesehen. Dies hat den Vorteil, daß es bei einer Erhöhung des Durchsatzes der Kurbelgehäusegase ohne weiteres in seiner axialen oder radialen Erstreckung verändert werden kann, zumindest aber besteht die Möglichkeit, daß das Element ausgewechselt werden kann. Die Vorrichtung zum Rückhalten von Flüssigkeiten 33 ist mittels der daran befestigten Deckeldichtung 29 im Gehäuse dichtend befestigt. Über die Reingasströmungsführung 28 gelangt der Reingasstrom der Kurbelgehäusegase zum Ölabscheideventil 6. Das abgeschiedene Öl gelangt über den Boden 9 und die darin enthaltene konische Aussparung zum Flüssigkeitsauslaß 8. Das Ölrückführelement 40 ist unterhalb der Ölablaßöffnung 35 des Ölauffangelements 34 befestigt, das das abgeschiedene Öl wieder an die Verbrennungskraftmaschine zurückgibt. Das von der Vorrichtung zum Rückhalten von Flüssigkeiten 33 abgeschiedene Öl gelangt über den Flüssigkeitsauslaß 8 in die Ölauffangkammer 39. Die Drehachse 23 der Dreikammertrommel 41 ist im Gehäuse 32 so reibungsarm gelagert, daß die Rotationsbewegung der Dreikammertrommel 41 allein aufgrund des durch das in der Ölauffangkammer 39 gelangende Öl initiiert wird. Die Öl enthaltende Kammer gibt ihre Ölfracht über Ölablaß 35 an das Ölrückführelement 40 an die nicht dargestellte Verbrennungskraftmaschine und wie in diesem Ausführungsbeispiel dargestellt über das Kurbelgehäuse 12 zurück.

Mittels der Gehäusedichtung 17, die den Kurbelgehäusegasstrom gegen die Umgebung abdichtet, ist das Gehäuse 32 samt Vorrichtung 33 ins Kurbelgehäuse 12 der nicht dargestellten Verbrennungskraftmaschine oder den Ventildeckel eingesteckt. Das in der Vorrichtung zum Rückhalten von Flüssigkeiten 33 oberhalb des Elementes 1 angeordnete Ölabscheideventil 36 besteht aus einem Ölabscheideventildeckel 13, einem Ölabscheideventilmembranteller 14, der darauf befestigten Ölabscheideventilmembran 15 und der den Öffnungsdruck des Ventils definierenden Ölabscheideventil-Feder 16. Das von den entsprechenden Flüssigkeitsanteilen befreite Kurbelgehäusereingas entweicht anschließend über das Ölabscheideventil 36 hin zu Luftauslaß 37, von welchem es z. B. zum hier nicht dargestellten Luftansaugtrakt der hier ebenfalls nicht dargestellten Verbrennungskraftmaschine strömt.

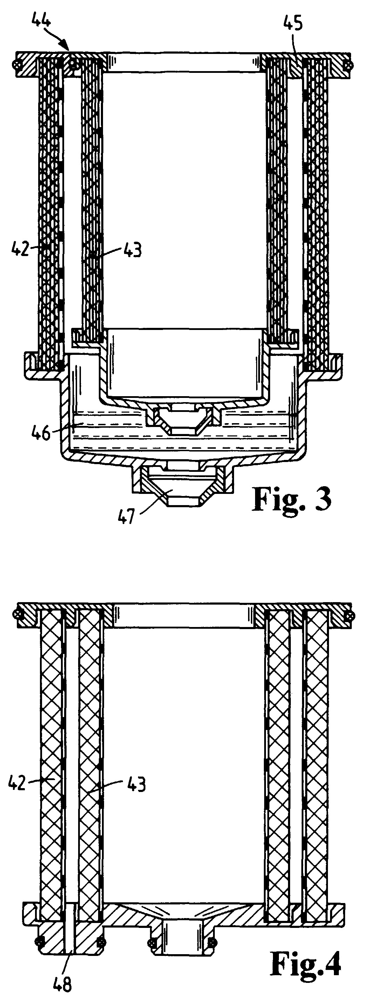

In Figur 3 ist ein Element als Stufenfilterelement dargestellt. Dieses besteht aus einem ersten Wickel 42 und einem zweiten Wickel 43, wobei beide an ihrem oberen Ende - wie linksseitig gezeigt - mit einer lösbaren Verbindung 44 oder - wie rechtsseitig dargestellt - einer unlösbaren Verbindung 45 gekoppelt sind. Im unteren Bereich ist zwischen den beiden Wickeln ein Flüssigkeitsreservoir 46 vorgesehen. Das Flüssigkeitsreservoir wird durch ein im Auslauf angeordnetes Rückschlagventil 47 verschlossen. Sobald die Flüssigkeit in dem Reservoir eine bestimmte Flüssigkeitshöhe erreicht hat, öffnet das Rückschlagventil 47 aufgrund des statischen Druckes, so daß die Flüssigkeit in einen hier nicht dargestellten Flüssigkeitsbehälter bzw. in das Kurbelgehäuse abfließen kann.

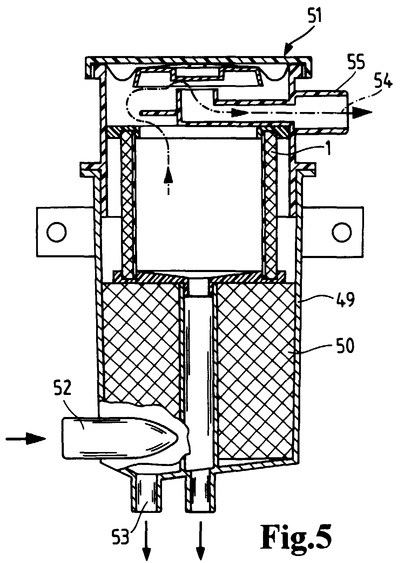

Figur 4 zeigt eine Variante eines in Reihe geschalteten Elements, welches ebenfalls zwei Wickel 42, 43 aufweist, wobei der Ablaufzwischen den beiden Wickeln über eine separate Ablaufbohrung 48 erfolgt.

Figur 5 zeigt ein Element 1, welches in einem Gehäuse 49 angeordnet ist, wobei in dem Gehäuse 49 ein Vorabsheider 50 integriert ist sowie ein Unterdruckregelventil 51. Das Gehäuse weist eine Anströmöffnung 52 aus. Diese Anströmöffnung kann beispielsweise mit einer Düse versehen sein, wobei die Düse eine Vergrößerung der Flüssigkeitströpfchen bewirkt. Die flüssigkeitsbeladenen Gase gelangen zu dem Vorabscheider, der beispielsweise aus einem Schaum oder einem Stahlgestrick aufgebaut ist. In diesem Vorabscheider wird ein Teil der Flüssigkeit abgeleitet und tritt durch die Öffnung 53 nach unten aus. Die teilweise gereinigten Gase gelangen nach oben zu dem Hauptabscheider, dem Element 1, strömen durch dieses Element und verlassen gemäß Pfeil 54 gereinigt den Ölabscheider.

Ein Unterdruckregelventil 51 ist beispielsweise in der EP 471 142 näher beschrieben. Es hat die Aufgabe, unabhängig von der am Austritt 55 herrschenden Höhe des Unterdrucks den im Kurbelgehäuse herrschenden Druck konstant zu halten.

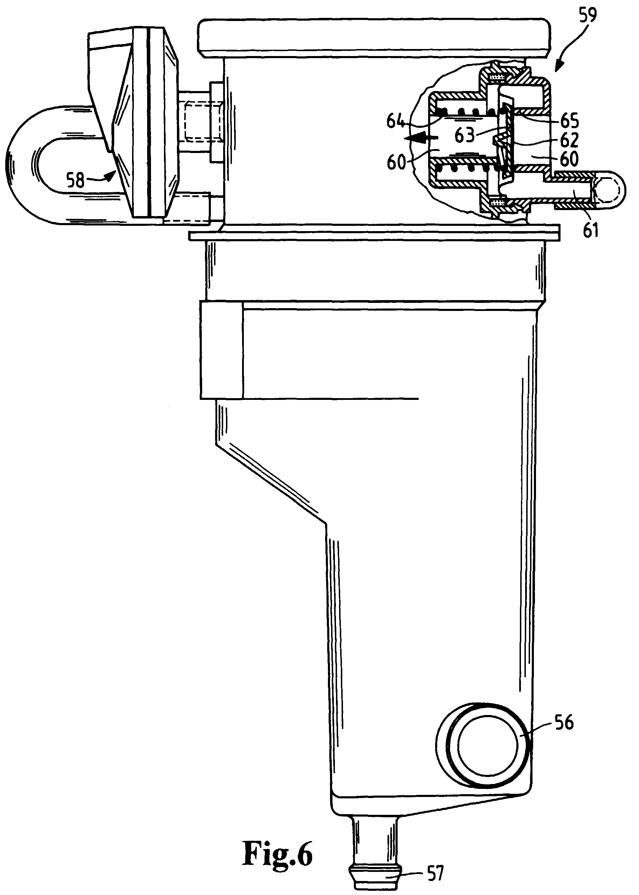

Figur 6 zeigt das Gehäuse eines Ölabscheiders mit einer Zutrittsöffnung 56 und einer Ölrücklauföffnung 57. In dem Gehäuse ist beispielsweise ein Element 1, wie in Figur 1 gezeigt, angeordnet. An dem Gehäuse ist ferner ein Differenzdruckanzeigegerät 58 vorgesehen. Dieses ist zwischen den Rohgasbereich und den Reingasbereich geschaltet und sensiert den über das Element sich einstellenden Differenzdruck. Sofern das Element verschmutzt ist und sich damit der Differenzdruck erhöht, erzeugt das Differenzdruckmeßgerät 58 ein Signal als Serviceanzeige.

Es ist ferner ein Sicherheitsventil 59 vorgesehen. Dieses Sicherheitsventil hat die Aufgabe, bei einem erhöhten Differenzdruck zwischen Reingasbereich 60 und Rohgasbereich 61 eine Verbindung herzustellen, so daß ein zu hoher Unterdruck auf den Rohgasbereich 61 vermieden wird. Das Sicherheitsventil weist eine Membran 62 mit einem Ventilteller 63 auf. Eine Druckfeder 64 bewegt den Ventilteller an den Flansch 65 und verschließt im Normalzustand die Verbindung zwischen dem Rohgasbereich 61 und dem Reingasbereich 60. Erst ein erhöhter Unterdruck auf der Reingasbereichseite 60 öffnet das Ventil, so daß ein Druckausgleich stattfinden kann.

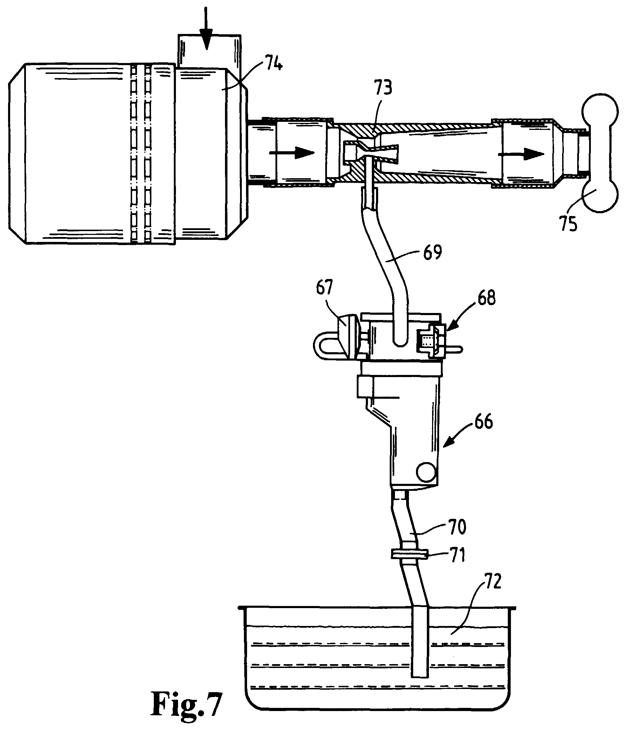

Figur 7 zeigt die schematische Darstellung der Komponenten für eine Kurbelgehäusegasentlüftung. Ein Ölabscheideelement 66 mit einem Differenzdruckschalter 67 und einem Bypassventil 68 ist innerhalb einer hier nicht dargestellten Brennkraftmaschine angeordnet und nimmt die Kurbelgehäusegase auf. Diese verlassen gereinigt über die Schlauchleitung 69 den Ölabscheider. Das Öl verläßt über die Schlauchleitung 70 und ein Rückschlagventil 71 das System und gelangt in die Ölwanne 72 zurück. Die gereinigten Gase werden über eine Venturidüse der von einem Luftfilter 74 kommenden gereinigten Ansaugluft zugeführt und strömen über einen Turbolader 75 mit der Ansaugluft in den Ansaugbereich der Brennkraftmaschine.

## Patentansprüche

1. Element zur Flüssigkeitsrückhaltung in Gasströmen, wobei das Element über wenigstens zwei Lagen eines Wirrfaservlieses (2), einen Einlaß (3), einen Flüssigkeitsauslaß (8) und einen Luftauslaß (7) verfügt.

2. Element nach Anspruch 1, dadurch gekennzeichnet, daß die Lagen des Wirrfaservlieses (2) die gleiche Faserfeinheit aufweisen.

3. Element nach Anspruch 1, dadurch gekennzeichnet, daß die Lagen des Wirrfaservlieses (2) unterschiedliche Faserfeinheiten aufweisen.

4. Element nach einem oder mehreren der vorgenannten Ansprüche, dadurch gekennzeichnet, daß eine Lage Wirrfaservlieses (2) ein Flächengewicht von 100 bis 500 Gramm pro Quadratmeter aufweist.

5. Element nach einem oder mehreren der vorgenannten Ansprüche, dadurch gekennzeichnet, daß im Bereich der Lagen aus Wirrfaservlies (2) ein gasdurchlässiges Stützmittel angeordnet ist.

6. Element nach einem oder mehreren der vorgenannten Ansprüche, dadurch gekennzeichnet, daß das Element (1) 3 oder mehr Lagen Wirrfaservlies (2) aufweist.

7. Element nach einem oder mehreren der vorgenannten Ansprüche, dadurch gekennzeichnet, daß das Element (1) einen Deckel (6) und einen Boden (9) aufweist.

8. Element nach einem oder mehreren der vorgenannten Ansprüche, dadurch gekennzeichnet, daß wenigstens eine Lage Wirrfaservlieses (2) aus melt-blown - Vlies besteht.

9. Element nach einem oder mehreren der vorgenannten Ansprüche, dadurch gekennzeichnet, daß die Fasern des Wirrfaservlieses (2) aus Polyester oder Polyamid bestehen.

10. Element nach einem der vorherigen Ansprüche, dadurch gekennzeichnet, daß dieses aus einem Stützrohr einer ersten Lage Drainagevlies, mehrere Lagen Wirrfaservlies und einer oder mehrere Lagen Spannband aufgebaut ist.

11. Element nach Anspruch 10, dadurch gekennzeichnet, daß zusätzlich zur Erhöhung des Abscheidegrads weitere Lagen Wirrfaservlies und eine weitere Lage Drainagevlies vorgesehen ist.

12. Element nach einem der vorherigen Ansprüche, dadurch gekennzeichnet, daß zwei oder mehrere Elemente (42, 43) parallel und/oder in Reihe geschaltet sind.

13. Vorrichtung zum Rückhalten von Flüssigkeiten in Gasströmen mit einem Element nach einem oder mehreren der vorgenannten Ansprüche, dadurch gekennzeichnet, daß ein Vorabscheider (50) aus Schaum, Stahlgestrick oder ähnlichem vorgesehen ist.

14. Vorrichtung nach dem Anspruch 13, dadurch gekennzeichnet, daß ein Unterdruckerzeuger (23) vorgesehen ist zum Erzeugen eines Differenzdruckes zwischen der Anströmseite und der Abströmseite.

15. Vorrichtung nach Anspruch 14, dadurch gekennzeichnet, daß ein Unterdrucksensor (67) vorgesehen ist zur Ermittlung des Unterdrucks auf der Abströmseite.
